(19) Europäisches Patentamt / European Patent Office / Office européen des brevets

(11) **EP 2 491 799 B1**

(12) **EUROPEAN PATENT SPECIFICATION**

(45) Date of publication and mention
of the grant of the patent:
**19.08.2015 Bulletin 2015/34**

(51) Int Cl.:
*A23L 1/176* *(2006.01)*     *A23L 1/00* *(2006.01)*
*A23L 1/0522* *(2006.01)*

(21) Application number: **10824925.1**

(22) Date of filing: **19.10.2010**

(86) International application number:
**PCT/JP2010/068348**

(87) International publication number:
**WO 2011/049076 (28.04.2011 Gazette 2011/17)**

(54) **COATING MATERIAL FOR FRIED FOODS**

ÜBERZUGSMATERIAL FÜR GEBRATENE LEBENSMITTEL

MATIÈRE D'ENROBAGE POUR ALIMENTS FRITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2009 JP 2009240021**

(43) Date of publication of application:
**29.08.2012 Bulletin 2012/35**

(73) Proprietor: **Nippon Starch Chemical Co., Ltd.**
**Yodogawa-ku**
**Osaka-shi**
**Osaka 532-0032 (JP)**

(72) Inventors:
• **TSUCHIYA, Yusuke**
**Osaka-shi**
**Osaka 532-0032 (JP)**
• **IESATO, Hisayuki**
**Osaka-shi**
**Osaka 532-0032 (JP)**
• **NAKAJIMA, Toru**
**Osaka-shi**
**Osaka 532-0032 (JP)**

(74) Representative: **Appleyard Lees**
**15 Clare Road**
**Halifax HX1 2HY (GB)**

(56) References cited:
**JP-A- 8 173 073        JP-A- 11 243 891
JP-A- 11 243 891       JP-A- 2003 325 119
JP-A- 2003 325 119    JP-A- 2004 113 236
JP-A- 2004 113 236    JP-A- 2005 185 122
JP-A- 2005 185 122    US-A- 4 963 378**

• **ABD: "Batter Fried Fish - gluten free", , 2 March
2006 (2006-03-02), pages 1-1, XP002712283,
www.gfzing.com Retrieved from the Internet:
URL:http://www.gfzing.com/2006/batter-frie d-
fish-gluten-free/ [retrieved on 2013-09-03]**
• **A. Bakhsh ET AL: "Heritable variation and
correlation between seed size, starch content and
its composition in chickpea", Pakistan Journal of
Botany, 1 January 1996 (1996-01-01), pages 1-7,
XP055077614, Retrieved from the Internet: URL:
http://www.pakbs.org/pjbot/PDFs/28(1)/ PJB28
(1)10.pdf [retrieved on 2013-09-04]**

**Description**

[Technical field]

The present invention relates to a coating material for fried and/or deep-fried food. More specifically, the invention describes a coating material for fried and/or deep-fried food capable to give homogenous batters and exhibiting when fried in oil a satisfactory adhesiveness with ingredients such as livestock meats, fishes and shells, vegetables or processed foods thereof, combined with an excellent texture well-balanced in crisp feel and soft feel.

[Background art]

Batter premixes mainly consist of low-gluten flour to which are added proteins, starches, emulsifiers or the like for purposes of texture improvement and thickening agents such as pregelatinized starch and gums to impart viscosity as necessary to the batter are used as coating materials for fried and/or deep-fried food. However, such conventional coating materials can be hardly used to prepare homogeneous batters and remain disadvantageous in that batter tends to settle out with time. Moreover, problems such as a significant reduction in commercial value due to a poor adhesion between ingredient (food item) and coating, thus making coating liable to detachment, occurred when cooking with such coating materials.

Numerous batters mainly composed of oil/fat-treated starch (otherwise referred to as oil/fat-processed starch, oil/fat-coated starch, etc.) have been proposed in order to prepare homogeneous batters and improve adhesiveness between a food item and a coating without using any wheat flour. Examples thereof include a process employing an oil/fat-processed starch whose slurry at a concentration of 40% by weight has a viscosity of at least 200 cPs (Jpn. unexamined patent publication No. 61-285956) and a coating material for fried and/or deep-fried food containing an oil/fat-coated starch having a surface compressive stress of 20 to 80 g/cm$^2$ and a water evaporation rate of 0.12 to 0.18%/second when adjusted with water to a concentration of 40% by weight (Jpn. unexamined patent publication No. 11-243891). Other proposals aiming to allow a textural enhancement through selecting starting starches to be oil/fat-treated starches are illustrated by a process using oil or fat-processed starches derived from a mixture of non-glutinous rice grain starch and glutinous rice grain starch or from glutinous rice grain starch, whose slurries having a concentration of 40% by weight show a viscosity of at least 200 cPs (Jpn. examined patent publication No. 5-17823) and by a process using an oil/fat-coated starch derived from a mixture of high-amylose starch and non-glutinous rice grain starch as well (Jpn. unexamined patent publication No. 8-173073).

Furthermore, the inventors attempting to resolve the issue of the compatibility between adhesiveness and texture invented a coating material for fried and/or deep-fried food using an oil/fat-treated starch to which an oil or fat having a trienoic unsaturated fatty acids content of at least 15% by mass. In the course of the researches relating to this invention, they discovered that adhesiveness could be further improved in the presence of an oil/fat-treated starch derived from a swelling-inhibited starch (Jpn. unexamined patent publication No. 2004-113236).

In addition, while not being an oil/fat-treated starch, a coating material mix for fried and/or deep-fried food mainly formulated in a characteristic manner with a legume starch or a wet heat-treated legume starch and capable to preserve the as freshly-fried desirable quality even for a prolonged period of time after frying is also disclosed in Jpn. unexamined patent publication No. 2003-325119.

[Prior Art]

[Patent Document]

[Patent Document 1] Jpn. unexamined patent publication No. 61-285956
[Patent Document 2] Jpn. unexamined patent publication No. 11-243891
[Patent Document 3] Jpn. examined patent publication No. 5-17823
[Patent Document 4] Jpn. unexamined patent publication No. 8-173073
[Patent Document 5] Jpn. unexamined patent publication No. 2004-113236
[Patent Document 6] Jpn. unexamined patent publication No. 2003-325119

'Batter Fried Fish - gluten free' on www.gfzing.com discloses a batter for frying fish comprising cornstarch, chickpea flour and peanut oil.

US4963378 discloses fried food having a crispy and chewy crust with the addition of high protein moong dal particles. JP11243891 discloses a coating for a fried food having good adhesiveness containing an oil and fat coating starch of an underground stem starch.

JP2005185122 discloses an oil and fat processed starch for a fry coating material with excellent binding properties. JP2003325119 discloses a flour mix for fried food without deterioration of texture comprising bean starch.

JP2004113236 discloses a batter for fried foods with an excellent palate feeling comprising a fat and oil processed powder.

[Summary of the Invention]

[Problems to be resolved by the Invention]

Although an improvement of adhesiveness can be seen as compared to previous batters mainly made of soft wheat flour, the techniques as disclosed by Patent Documents 1 and 2 are not fully satisfactory as regards textural characteristics. Thereafter, efforts were made along with techniques as disclosed by Patent Documents 3 and 4 to improve texture by selecting the raw starch intended for oil or fat treatment. However, while requirements for adhesiveness become stronger as technologies advance, these techniques where texture deteriorates if emphasis is put on adhesiveness while insufficient adhesiveness is seen when texture is emphasized are not able to resolve the challenge of the compatibility between adhesiveness and texture on a high level basis.

Furthermore, the technique as disclosed by the Patent Document 6, although imparting a satisfactory texture, did not bring the slightest improvement of adherence of coating to items to be fried.

Accordingly, the inventors developed the technique as disclosed by Patent Document 5 as a means to resolve aforementioned problems. In particular, they managed to create a higher compatibility between adhesiveness and texture by using a swelling-inhibited starch as a raw material for oil/fat-treated starch, but this process problematically required a plurality of steps and, even if manufacturing could be performed in one step, was disadvantaged by the complexity of the operations involved. Moreover, the manufacturing industry was recently urged to make products whose pressure on the environment is reduced, thus drawing attention on manufacturing methods using less chemicals and saving energy. Since phosphate cross-linked starch as a representative for swelling-inhibited starch as used in the technique disclosed by Patent Document 5 is usually produced through a wet process (a process in which starch is reacted after having been suspended in water), this leads to large amounts of effluents and makes it imperative to use chemicals as reagents. Moreover, usage of a wet-heat/dry-heat treated starch as swelling-inhibited starch may reduce the consumption of chemicals, but requires a great amount of energy for heat treatment. Under such circumstances, development of an energy-saving way of manufacturing environment-friendly products with fewer chemicals while exhibiting higher level of adhesiveness and texture was highly demanded. In this regard, energy savings and reduction of chemicals usage are achievable if manufacturing of an oil/fat-treated starch having a high adhesiveness and an excellent texture from a non-processed starch (that is a starch which is not subjected to a modifying such as a chemical treatment or a physical treatment) is feasible.

In view of the aforementioned problems to be resolved, the invention is intended to provide in an environmentally-friendly manner a coating material for fried and/or deep-fried food capable of yielding fried and/or deep-fried foods exhibiting a high level of adhesiveness and excellent texture.

[Means for resolving the problems]

The invention is as defined by the appended claims.

Through their extensive research efforts to solve such problems, the inventors have discovered that among non-modified starches, oil/fat-treated starches derived from a raw material containing 50% by mass or more of pea starch and 10 to 60% by mass of amylose possess a high level of adhesiveness and excel in texture. Thus, the present invention has been accomplished. That is, the coating material for fried and/or deep fried food according to the invention characteristically consists in an oil/fat-treated starch whose raw starch subjected to oil or fat treatment contains 50% by mass or more of a pea starch and has an amylose content ranging between 10 and 60% by mass. The invention is also characterized in that the viscosity retention rate of such oil/fat-treated starch as measured with a Viskograph is 75% or more, thereby allowing obtaining a coating material for fried and/or deep-fried food having a higher adherence.

[Effects of the Invention]

Although the coating material for fried and/or deep-fried food according to the present invention consists in an oil/fat-treated starch derived from a non-modified starch as a raw material, it has advantages of manufacturing fried and/or deep-fried foods exhibiting a high level of adhesiveness and excelling in texture and taste as well and applying a reduced pressure on the environment.

The coating material for fried and/or deep-fried food according to the invention is described below in details, but the scope of the invention is not limited to and by these descriptions.

Additionally, for the purposes of the invention, a "raw starch" stands for a raw material to be oil/fat-treated, which may be used solely or combined with another starch.

The oil/fat-treated starches according to the invention may be pea starches solely or combined with another starch as a raw starch. In the case of such combination, the raw starch (in the case of combination with another starch, referred to as the starch after mixture) has the pea starch content of 50% by mass or more. When the pea starch content of the raw starch is less than 50% by mass, the attributes of pea starches do not develop sufficiently and neither high level of adhesiveness nor excellent texture are gained. In addition, the amylose content of such raw starch ranges between 10 and 60% by mass. If the amylose content does not comply with that range, adhesiveness will be inferior and texture will lack crisp feel and soft feel.

The other starch to be combined is not particularly limited and examples thereof include so-called native starches such as cornstarch, waxy cornstarch, high-amylose cornstarch, tapioca starch, potato starch, sweet potato starch, wheat starch, rice starch, sago starch, canna starch or the like as well as corn grits, wheat flour, rice flour, powder of dried strips of sweet potato and powder of dried strips of cassava. One or more of these may be used. Because the texture of the resulting coating material for fried and/or deep-fried food varies depending on which type of starch is combined, such starch to be combined with raw starch can be selected in accordance with the intended use.

Of course, modified starches can be used as raw starch for oil/fat-treated starches, but given that the objectives such as energy saving and reduction of the chemicals load as aimed by the invention cannot be achieved if a modified starch is used, modified starches are not included in the scope of raw starches for oil/fat-treated starches according to the invention. However, starch may be subjected to modification in the course of the oil or fat treatment process because a heating and maturing treatment is likely to take place as described hereinafter. Thus, [modified starches are not included in the scope of raw starches] as above-mentioned does not include as a general meaning the modification associated with the heating-maturing treatment occuring in the course of such an oil or fat treatment.

As example of texture adjustment, there is a tendency in recent years to set a soft texture requirement for coating material for fried and/or deep-fried food, but although crisp feel generally gets stronger as legume starch content is higher, texture ends up to be somewhat hard. To ensure a soft texture, it is therefore preferable to select as starch to be combined a material capable to give such a soft texture like tapioca starch, waxy cornstarch and glutinous rice starch for example.

The amylose content according to the invention refers to the proportion of amylose in raw starch. In the case of combining another starch with the pea starch, the amylose content is determined on the starch admixture comprised of the both starches. The quantitative methods for determining the amylose content include various techniques such as iodine affinity measurement methods (potentiometric titration, amperometric titration), iodine colorimetry, paper chromatography and the like, but measured values of amylose content so obtained from different measurement methods do not necessarily correspond. The amylose content of raw starch according to the invention is determined by the amperometric titration of the iodine affinity measurement methods (Starch Science Handbook, pp.177-179, J. Nikuni Chief Editor, First Edition published on 1977, Asakura Shoten).

Starches to be subjected to measurements were dissolved in dimethylsulfoxide (DMSO below), then impurities were removed by centrifugation. Subsequently, the DMSO-starch solution was reprecipitated with ethanol, and then the precipitate was pulverized by drying under reduced pressure. The titration was performed on the Automatic Potentiometric Titrator model AT-118 from Kyoto Electronics Manufacturing Co., Ltd.

The oil/fat-treated starch according to the invention is a starch whose surface properties are modified by attaching an oil or fat at least onto one portion of the raw powder particle surface. This is obtained by mixing an oil or fat with starch, then treating by heat-maturing the mixture at a temperature equal to or higher than ordinary temperature. The resulting starch exhibits a behavior different from that of a starch merely mixed with an oil or fat.

The heat-maturing treatment consists in treating at a temperature equal to or higher than ordinary temperature a mixture of amylaceous material with an oil or fat. This treatment goes on if temperature is at least equal to ordinary temperature, but time necessary for heat-maturing will be shortened under high temperatures. However, adherence may decrease on usage as coating material for fried and/or deep-fried food under an excessively high temperature because raw starch would then be subjected to hydrolysis or heat degradation. Now therefore, conditions under which no excessive degradation occurs on heat-maturing treatment must be set.

No particular limitation is imposed on the edible oil and fat employed in the production of oil/fat-treated starch according to the invention. Examples of such oils and fats include vegetable oils and fats such as soybean oil, cotton seed oil, corn oil, rapeseed oil, safflower oil, olive oil, sesame oil, rice oil, coconut oil, flaxseed oil, perilla oil and perilla seed oil as well as animal oils and fats such as sardine oil, herring oil and cod liver oil.

Furthermore, as disclosed in Jpn. unexamined patent publication No. 2004-113236, a better adhesiveness is achieved by employing an edible oil or fat having a content of trienoic unsaturated fatty acids of 15% by mass or more. Fish oils such as sardine oil and herring oil, but also vegetable oils such as perilla oil, perilla seed oil, borage oil, evening primrose oil, hempseed oil and flaxseed oil are examples of oils and fats containing 15 mass% or more of trienoic unsaturated fatty acids. Given that linolenic acid is representative of such trienoic unsaturated fatty acids, perilla oil, perilla seed oil, borage oil, evening primrose oil, hempseed oil and flaxseed oil whose linolenic acid content is equal to or higher than 15% by mass thus may be used as oils suitable for the invention.

The fatty acid composition of the edible oils and fats can be determined after hydrolysis by analytical means such as gas chromatography.

The preferred amount of these oils and fats added to the raw starch ranges between 0.01 and 1.0% by mass, more preferably from 0.05 to 0.5% by mass. No sufficient adhesiveness between ingredient to be fried and coating would be demonstrated if said amount is inferior to 0.01% by mass, whereas excessive addition of oil or fat over 1.0% by mass would result in an increased risk of caking for oil/fat-treated starch.

All methods for adding oils and fats are acceptable as long as such substances can be uniformly dispersed and mixed with the raw powder, in particular by mixing in a mixer the raw starch previously added with oil or fat. A heat-maturing temperature from 30°C to 150°C is preferred. Temperatures under 30°C which require a very long time for heat-maturing are not suitable for practical use, whilst those over 150°C are undesirable because they are at high risk for raw starch degradation. The higher the temperature is the shorter time it takes to accomplish the heat-maturing process, but a value comprised between 1 and 336 hours (2 weeks) is preferred.

Coating materials for fried and/or deep-fried food having a better adhesiveness are particularly required in the case of poorly adherent ingredients. Meats injected with seasoned liquid preparation and full-fat bologna sausages are examples of such particularly poorly adherent ingredients. In order to impart an excellent adhesiveness even to such ingredients, a coating material for fried and/or deep-fried food an oil/fat-treated starch having a viscosity retention rate after heat-maturing treatment of 75% or more is employed. The viscosity retention rate is calculated as follows.

<Viscosity measurement method>

On a Viskograph PT100 (Brabender) equipped with a plate-type stirrer, a starch suspension having a concentration of anhydrous starch of 8% is heated up from 40°C to 95°C at a rate of 1.5°C/min, then held for 10 minutes once 95°C have been reached.

<Viscosity retention rate>

Given Vp [BU] the peak viscosity on the viscosity curve plotted according to the above method and Ve [BU] the viscosity after the 10 min standing period at 95°C, with the proviso that V=100% when a peak does not appear by the time the measurement is completed, the viscosity retention rate V reported as [BU] is calculated from the formula as shown below.

$$V = (Ve/Vp) \times 100$$

The oil/fat-treated starch of the invention can be used as a coating material for fried and/or deep-fried food to prepare fried items, tempura, deep-fried breaded pork, deep-fried breaded beef, fried minced cutlets, fried chicken cutlets, cream croquettes, fritters, sea food beignets and the like as well as dusting flour, dredging powder and batter.

Depending on which kind of food ingredient is used, when needed, the oil/fat-treated flour of the invention may be used in combination with materials commonly used as coatings for fried and/or deep-fried food items. Concrete examples of such materials include cereal flours (wheat flour, corn flour, rice flour, pregelatinized cereal flours, etc.), non-modified starches (cornstarch, wheat starch, rice starch, etc.), modified starches (oil/fat-processed starches other than the oil/fat-treated starches of the invention, hypochlorite-oxidized starches, acid-treated starches, pregelatinized starch, dry heat-treated starches, wet heat-treated starches, cross-linked starches, esterified starches, etherified starches, esterified cross-linked starches, etherified cross-linked starches, etc.), saccharides (monosaccharides, disaccharides, oligosaccharides, starch hydrolysates, reduced starch hydrolysates, etc.), natural gums (guar gum, xanthan gum, tamarind seed gum, carrageenan, etc.), swelling agents (baking powder, sodium bicarbonate, etc.), proteins (soybean proteins, milk proteins, egg albumen, egg yolk, casein, etc.), oils and fats (soybean oil, margarine, etc.), emulsifiers (lecithine, glycerol fatty esters, sugar esters, etc.), pigments (β-carotene, Enchi yellow, etc.) and seasonings (mirin, shoyu, salt, sodium glutamate, nucleic acid based flavoring agents, etc.).

Below is described in more detail the invention by way of examples which do not restrict the scope thereof. Henceforth, [% by mass] and [parts by mass] are indicated by [%] and [parts] respectively.

[Examples]

Raw starches used in examples and comparative examples are indicated along with their amylose content in Table 1 for non-modified starches and in Table 2 for modified starches modified starches were prepared as follows.

<Phosphate cross-linked pea starches>

Two slurries prepared by adding under stirring 1000 parts of a non-modified pea starch to the solution of 100 parts of sodium sulfate and 5 parts of caustic soda in 1300 parts of water were reacted for 15 hours at 40°C after having been added with 0.1 part or 1 part of sodium trimetaphosphate (STMP). Subsequently, a phosphate cross-linked pea starch-1 (STMP: 0.1 part) and a phosphate cross-linked pea starch-2 (STMP: 1 part) were made through neutralization, water washing, dehydration, drying and fine-powdering processes.

<Acetylated pea starches>

Two slurries prepared by adding 1000 parts of a non-modified pea starch to 1300 parts of water were reacted for one hour after having been gradually added with 5 parts or 25 parts of acetic anhydride while maintaining to pH 8.5 to 9.0 by adding a 3% caustic soda aqueous solution under stirring. Subsequently, an acetylated pea starch-1 (acetic anhydride: 5 parts; acetyl groups 0.25%) and an acetylated pea starch-2 (acetic anhydride: 30 parts; acetyl groups 1.6%) were made through neutralization, water washing, dehydration, drying and fine-powdering processes.

<Hydroxypropylated pea starch>

A slurry prepared by adding under stirring 1000 parts of a non-modified pea starch to the solution of 100 parts of sodium sulfate and 5 parts of caustic sodium in 1300 parts of water was reacted for 15 hours at 40°C after having been added with 60 parts of propylene oxide. Subsequently, a hydroxypropylated pea starch (hydroxypropoxyl groups 4.1%) was made through neutralization, water washing, dehydration, drying and fine-powdering processes.

[Table 1]

| Raw starches | Amylose content [%] |
|---|---|
| Pea starch | 41 |
| Mung bean starch | 35 |
| Lentil starch | 37 |
| Wrinkled pea starch | 74 |
| Cornstarch | 25 |
| Tapioca starch | 19 |
| Potato starch | 25 |
| Sweet potato starch | 19 |
| Sago starch | 27 |
| Waxy cornstarch | Not detected |
| High amylose cornstarch | 59 |
| Glutinous rice starch | 2.0 |

[Table 2]

| Raw starches | Amylose content [%] | Substituent group [%] |
|---|---|---|
| Phosphate cross-linked pea starch-1 | 41 | --- |
| Phosphate cross-linked pea starch-2 | 41 | --- |
| Acetylated pea starch-1 | 41 | 0.25 |

(continued)

| Raw starches | Amylose content [%] | Substituent group [%] |
|---|---|---|
| Acetylated pea starch-2 | 41 | 1.6 |
| Hydroxypropylated pea starch | 41 | 4.1 |
| Note: A symbole "---" in the table indicates 0. | | |

<Examples>

After having added and mixed 0.1 part of a variety of edible oils and fats to the various raw starches, heating carried out for 4 hours at 120°C in an air bath yielded the oil/fat-treated starch samples 1 to 23. Employed raw starches and edible oils and fats are listed in Table 3.

Linolenic acid contents were as follows: perilla oil, 55%; perilla seed oil, 65%; flaxseed oil, 50%; safflower oil, 0%; corn oil, 2%.

<Comparative examples>

Oil/fat-treated starch samples 24 to 39 were obtained in the same manner as for examples.

[Table 3]

| Sample No. | Raw starches (1) | Raw starches (2) | Raw starchs(3) | (1) : (2) : (3) ratio | Edible oils and fats |
|---|---|---|---|---|---|
| 1 | Pea starch | --- | --- | 100:0:0 | Perilla oil |
| 2 | Pea starch | --- | --- | 100:0:0 | Perilla seed oil |
| 3 | Pea starch | --- | --- | 100:0:0 | Flaxseed oil |
| 4 | Pea starch | --- | --- | 100:0:0 | Safflower oil |
| 5 | Pea starch | --- | --- | 100:0:0 | Corn oil |
| 6 | Mung bean starch | --- | --- | 100:0:0 | Perilla oil |
| 7 | Lentil starch | --- | --- | 100:0:0 | Perilla oil |
| 8 | Pea starch | Cornstarch | --- | 50:50:0 | Perilla oil |
| 9 | Pea starch | Tapioca starch | --- | 50:50:0 | Perilla oil |
| 10 | Pea starch | Potato starch | --- | 50:50:0 | Perilla oil |
| 11 | Pea starch | Sweet potato starch | --- | 50:50:0 | Perilla oil |
| 12 | Pea starch | Sago starch | --- | 50:50:0 | Perilla oil |
| 13 | Pea starch | Waxy cornstarch | --- | 50:50:0 | Perilla oil |
| 14 | Pea starch | High amylase cornstarch | --- | 50:50:0 | Perilla oil |
| 15 | Pea starch | Glutinous rice starch | --- | 50:50:0 | Perilla oil |
| 16 | Pea starch | Wrinckled pea starch | --- | 80:20:0 | Perilla oil |
| 17 | Pea starch | Wrinckled pea starch | --- | 50:50:0 | Perilla oil |
| 18 | Pea starch | Tapioca starch | --- | 75:25:0 | Perilla oil |
| 19 | Pea starch | Tapioca starch | --- | 25:75:0 | Perilla oil |
| 20 | Pea starch | Waxy cornstarch | --- | 75:25:0 | Perilla oil |
| 21 | Pea starch | Waxy cornstarch | --- | 25:75:0 | Perilla oil |
| 22 | Pea starch | Tapioca starch | Waxy cornstarch | 50:25:25 | Perilla oil |
| 23 | Pea starch | Tapioca starch | Cornstarch | 50:25:25 | Perilla oil |
| Note: A symbole "---" in the table indicates 0. | | | | | |

[Table 4]

| Sample no. | Raw starches (1) | Raw starches (2) | (1):(2) ratio | Edible oils and fats |
|---|---|---|---|---|
| 24 | Cornstarch | --- | 100:0 | Perilla oil |
| 25 | Tapioca starch | --- | 100:0 | Perilla oil |
| 26 | Potato starch | --- | 100:0 | Perilla oil |
| 27 | Wrinkled pea starch | --- | 100:0 | Perilla oil |
| 28 | Phosphate cross-linked pea starch-1 | --- | 100:0 | Perilla oil |
| 29 | Phosphate cross-linked pea starch-2 | --- | 100:0 | Perilla oil |
| 30 | Acetylated pea starch-1 | --- | 100:0 | Perilla oil |
| 31 | Acetylated pea starch-2 | --- | 100:0 | Perilla oil |
| 32 | Hydroxypropylated pea starch | --- | 100:0 | Perilla oil |
| 33 | High amylose corn starch | Cornstarch | 50:50 | Perilla oil |
| 34 | High amylose corn starch | Tapioca starch | 50: 50 | Perilla oil |
| 35 | High amylose corn starch | Potato starch | 50:50 | Perilla oil |
| 36 | Cornstarch | Waxy cornstarch | 50:50 | Perilla oil |
| 37 | Pea starch | Wrinkled pea starch | 25:75 | Perilla oil |
| 38 | Pea starch | Tapioca starch | 15:85 | Perilla oil |
| 39 | Pea starch | Waxy cornstarch | 15:85 | Perilla oil |
| Note: A symbol "---" in the table indicates 0. | | | | |

experimental example 1>

0.2 to 1.0 part of guar gum as viscosity corrector were added to 100 parts of oil/fat-treated starches of samples 1 to 7 obtained in examples and of samples 24 to 32 obtained in comparative examples so as to get a batter viscosity from 2500 to 3500 mPa·s (B-type viscosimeter, rotor no. 3, 12 rpm, 15°C). Batters were then prepared by mixing 180 parts of water to each sample. Deep-fried breaded pork cutlets were made by evenly applying those batters on frozen pork loins, rolling them into bread crumbs and, after overnight freezing, frying 5 pieces of each for 5 minutes in cooking oil heated at 180°C. Adhesiveness and texture of resulting pork cutlets were evaluated according to the following assessment criteria.

Immediately after frying, adhesiveness on cut surface of the 5 pork cutlets was evaluated on a zero-to-ten scale on the basis of average values.

<Adhesiveness of coating to food ingredient >

Score    : Evaluation
10       : tenaciously adherent
8        : relatively tenaciously adherent, despite slight separations
6        : relatively favorably adherent, despite some separations
4        : rather highly visible separations, poor adhesiveness as a whole
2        : numerous separations on cut surface of which more than half with no adherence

Five assessors were asked to score texture upon tasting on a zero-to-ten scale. Results were obtained on the basis of average values.

<Texture>

Score : Evaluation
10 : extremely favorable texture with a good balance between crisp feel and soft feel
8 : favorable texture with relatively proper crisp feel and soft feel
6 : rather insufficient crisp feel or soft feel, with some tackiness felt
4 : rather hard or rather sticky, somewhat poor texture
2 : Too hard or too sticky, poor texture

A global assessment was made on the basis of the total scores provided by adhesiveness and texture ratings.

<Global assessment>

AA : total scores 18.0-20.0
A : total scores 16.0-17.9
B : total scores 14.0-15.9
C : total scores 12.0-13.9
D : total scores 10.0-11.9
E : total scores 0.0-10.0

Results of experimental example 1 are summarized in Table 5.

[Table 5]

| Samples no. | | Amylose content [%] | Legume starch content [%] | Adhesiveness | Texture | Global Assessment |
|---|---|---|---|---|---|---|
| Examples | 1 | 41 | 100 | 9.8 | 8.6 | AA |
| | 2 | 41 | 100 | 9.8 | 8.6 | AA |
| | 3 | 41 | 100 | 9.6 | 8.4 | AA |
| | 4 | 41 | 100 | 8.4 | 8.2 | A |
| | 5 | 41 | 100 | 8.4 | 8.4 | A |
| | 6 | 35 | 100 | 9.4 | 8.8 | AA |
| | 7 | 37 | 100 | 9.4 | 8.6 | AA |
| Comparative examples | 24 | 25 | 0.0 | 5.4 | 4.2 | E |
| | 25 | 19 | 0.0 | 2.4 | 2.2 | E |
| | 26 | 25 | 0.0 | 3.8 | 3.4 | E |
| | 27 | 74 | 100 | 2.8 | 2.2 | E |
| | 28 | 41 | 100 | 9.6 | 8.4 | AA |
| | 29 | 41 | 100 | 7.8 | 4.6 | C |
| | 30 | 41 | 100 | 9.8 | 7.6 | A |
| | 31 | 41 | 100 | 7.4 | 4.8 | C |
| | 32 | 41 | 100 | 6.2 | 3.6 | E |

The oil/fat-treated starches derived from legume starch of samples no. 1 to 7 (examples) are superior as regards both adhesiveness and texture as compared to oil/fat-treated starches derived from other starches (samples no. 24 to 26). However, although using a legume starch, that derived from wrinkled pea starch which stood out of the 10 to 60% range for amylose content was less favorably assessed (sample no. 27).

The oil/fat-treated starches derived from legume starch of samples no. 1 to 7 (examples) have the advantages of energy saving, less chemicals usage and reduced cost as compared to modified pea starches of samples no. 28 to 32 (comparative examples) and exhibited adhesiveness and texture equal or superior to the modified starches. The modified starches were found to be inferior to non-modified starches depending on the degree of modifying as regards both adhesiveness and texture (samples no.29, 31, 32).

<Experimental example 2>

0.2 to 1.0 part of guar gum as viscosity corrector were added to 100 parts of oil/fat-treated starches of samples 8 to 23 obtained in examples and of samples 33 to 39 obtained in comparative examples so as to get a batter viscosity from 2500 to 3500 mPa·s (B-type viscosimeter, rotor no.3, 12 rpm, 15°C). Batters were then prepared by mixing 180 parts of water to each sample. Deep-fried breaded pork cutlets were made by evenly applying those batters on frozen pork loins, rolling them into bread crumbs and, after overnight freezing, frying 5 pieces of each for 5 minutes in cooking oil heated at 180°C. Adhesiveness and texture of resulting pork cutlets were evaluated according to the same assessment criteria as in Experimental example 1.

Results of Experimental example 2 are summarized in Table 6.

[Table 6]

| Samples no. | | Amylose content [%] | Legume starch content [%] | Adhesiveness | Texture | Global assessment |
|---|---|---|---|---|---|---|
| Examples | 8 | 33 | 50.0 | 8.6 | 8.2 | A |
| | 9 | 30 | 50.0 | 9.4 | 9.4 | AA |
| | 10 | 33 | 50.0 | 8.8 | 7.8 | A |
| | 11 | 30 | 50.0 | 8.6 | 7.6 | A |
| | 12 | 34 | 50.0 | 8.8 | 7.6 | A |
| | 13 | 21 | 50.0 | 9.2 | 9.6 | AA |
| | 14 | 50 | 50.0 | 8.6 | 8.0 | A |
| | 15 | 22 | 50.0 | 9.2 | 9.6 | AA |
| | 16 | 47 | 100 | 9.0 | 8.2 | A |
| | 17 | 58 | 100 | 9.2 | 7.6 | A |
| | 18 | 35 | 75.0 | 9.8 | 9.4 | AA |
| | 19 | 25 | 25.0 | 7.2 | 7.0 | B |
| | 20 | 31 | 75.0 | 9.6 | 9.4 | AA |
| | 21 | 10 | 25.0 | 7.6 | 7.0 | B |
| | 22 | 25 | 50.0 | 9.2 | 9.6 | AA |
| | 23 | 26 | 50.0 | 9.0 | 9.2 | AA |
| Comparative examples | 33 | 42 | 0.0 | 4.2 | 4.2 | E |
| | 34 | 39 | 0.0 | 5.8 | 6.0 | D |
| | 35 | 42 | 0.0 | 5.8 | 5.6 | D |
| | 36 | 13 | 0.0 | 3.8 | 7.4 | D |
| | 37 | 66 | 100 | 6.4 | 3.2 | D |
| | 38 | 22 | 15.0 | 4.4 | 3.6 | D |
| | 39 | 6.2 | 15.0 | 4.4 | 3.4 | D |

A comparison between samples no. 8 to 23 (examples) and samples no. 33 to 36 (comparative examples) indicated that when a mixture of a legume starch with another starch is used, excellent adhesiveness and texture are obtained as compared to mixed materials of high amylose starch and non-glutinous rice starch or mixed materials of non-glutinous rice starch and glutinous rice starch of the prior art. On the other hand, from results of samples no. 37 to 39 (comparative examples), adhesiveness and texture were found to be inferior when legume starch content is less than 25% by mass or, even with a legume starch content equal or superior to 25% by mass, if amylose content does not fall in the range of 10 to 60% by mass.

<Experimental example 3>

0.2 to 1.0 part of guar gum as viscosity corrector were added to 100 parts of oil/fat-treated starches of samples 1 to 23 obtained in examples, then batters were prepared by mixing 180 parts of water to each sample to get a batter viscosity from 2500 to 3500 mPa·s (B-type viscosimeter, rotor no.3, 12 rpm, 15°C). Deep-fried ham cutlets were made by evenly applying those batters on frozen bologna sausages, rolling them into bread crumbs and, after overnight freezing, frying 5 pieces of each for 2 minutes in cooking oil heated at 180°C. Adhesiveness and texture of resulting ham cutlets were evaluated according to the same assessment criteria as in Experimental example 1.

Results of Experimental example 3 are summarized in Table 7.

[Table 7]

| Samples no. | | Viscosity retention rate [%] | Amylose content [%] | Legume starch content [%] | Adhesiveness | Texture | Global assessment |
|---|---|---|---|---|---|---|---|
| Examples | 1 | 100 | 41 | 100 | 8.2 | 8.6 | A |
| | 2 | 100 | 41 | 100 | 8.4 | 8.6 | A |
| | 3 | 100 | 41 | 100 | 8.0 | 8.6 | A |
| | 4 | 100 | 41 | 100 | 7.8 | 8.4 | A |
| | 5 | 100 | 41 | 100 | 7.8 | 8.4 | A |
| | 6 | 92.7 | 35 | 100 | 8.2 | 8.4 | A |
| | 7 | 85.5 | 37 | 100 | 8.2 | 8.2 | A |
| | 8 | 75.4 | 33 | 50.0 | 8.2 | 8.0 | A |
| | 9 | 77.7 | 30 | 50.0 | 8.4 | 9.0 | A |
| | 10 | 63.5 | 33 | 50.0 | 7.0 | 7.6 | B |
| | 11 | 67.8 | 30 | 50.0 | 6.8 | 7.4 | B |
| | 12 | 73.7 | 34 | 50.0 | 7.4 | 7.4 | B |
| | 13 | 75.9 | 21 | 50.0 | 8.2 | 9.0 | A |
| | 14 | 100 | 50 | 50.0 | 8.2 | 7.8 | A |
| | 15 | 75.6 | 22 | 50.0 | 8.0 | 9.0 | A |
| | 16 | 100 | 47 | 100 | 8.4 | 7.8 | A |
| | 17 | 100 | 58 | 100 | 8.4 | 7.6 | A |
| | 18 | 94.8 | 35 | 75.0 | 8.8 | 9.2 | AA |
| | 19 | 48.8 | 25 | 25.0 | 6.2 | 6.8 | C |
| | 20 | 94.1 | 31 | 75.0 | 8.6 | 9.4 | AA |
| | 21 | 58.6 | 10 | 25.0 | 6.4 | 7.0 | C |
| | 22 | 75.4 | 25 | 50.0 | 7.8 | 9.4 | A |
| | 23 | 76.2 | 26 | 50.0 | 7.6 | 9.0 | A |

In the test by using particularly poorly adherent ingredients such as bologna sausages, even among oil/fat-treated starches containing 25% or more of legume starch and having an amylose content ranging between 10 and 60%, those oil/fat-treated starches whose viscosity retention rate was equal to or higher than 75% were assessed as remarkable.

## Claims

1. A coating material for fried and/or deep-fried food consisting in an oil/fat-treated starch obtained by treating a raw starch containing 50% by mass or more of pea starch with ranges between 0.01 and 1.0% by mass of an oil or fat and heat-maturing at a temperature from 30 to 150°C for between 1 and 336 hours, the starch having an amylose content ranging between 10 and 60 % by mass as measured by amperometric titration according to the iodine affinity measurement method, **characterized in that** the resulting oil/fat-treated starch has a viscosity retention rate (V) not less than 75% as calculated from the formula:

$$V = (Ve/Vp) \times 100$$

Vp [BU] being the peak viscosity on a viscosity curve measured from a starch suspension having a concentration of anhydrous starch of 8% from 40°C to 95°C at a rate of 1.5°C/min and Ve [BU] being the viscosity after a 10 min standing period at 95°C, with the proviso that V=100% when a peak does not appear by the time the measurement is completed.

2. The coating material for fried and/or deep-fried food according to claim 1, **characterized in that** the raw starch is a mixture of one or more starches selected from tapioca starch, waxy cornstarch and glutinous rice starch with pea starch.

3. The coating material for fried and/or deep-fried food according to claims 1 or 2, **characterized in that** the oil/fat is perilla oil.

## Patentansprüche

1. Überzugsmaterial für gebratene und/oder frittierte Lebensmittel, bestehend aus einer Öl/Fettbehandelten Stärke, erhalten durch Behandeln einer rohen Stärke, die 50 Masse-% oder mehr an Erbsenstärke enthält, mit Bereichen zwischen 0,01 und 1,0 Masse-% an einem Öl oder Fett und Wärmereifen bei einer Temperatur von 30 bis 150 °C über einen Zeitraum zwischen 1 und 336 Stunden, wobei die Stärke einen Amylosegehalt im Bereich zwischen 10 und 60 Masse-%, wie gemessen durch amperometrische Titration gemäß dem Iodaffinitäts-Messverfahren, aufweist, **dadurch gekennzeichnet, dass** die erhaltene Öl/Fett-behandelte Stärke eine Viskositätsretentionsrate (V) wie berechnet aus der Formel:

$$V = (Ve/Vp) \times 100$$

von nicht weniger als 75 % aufweist, wobei Vp [BU] die Maximalviskosität auf einer Viskositätskurve ist, gemessen an einer Stärkesuspension, die eine Konzentration von wasserfreier Stärke von 8 % aufweist, von 40 °C bis 95 °C mit einer Rate von 1,5 °C/min, und Ve [BU] die Viskosität nach einer Halteperiode von 10 min bei 95 °C ist, mit der Maßgabe, dass V = 100 %, wenn bis zu der Zeit, bei der die Messung abgeschlossen ist, kein Maximum erscheint.

2. Überzugsmaterial für gebratene und/oder frittierte Lebensmittel gemäß Anspruch 1, **dadurch gekennzeichnet, dass** die rohe Stärke ein Gemisch von einer oder mehreren Stärken ausgewählt aus Tapiokastärke, wachsartiger Maisstärke und klebriger Reisstärke mit Erbsenstärke ist.

3. Überzugsmaterial für gebratene und/oder frittierte Lebensmittel gemäß Anspruch 1 oder 2, **dadurch gekennzeichnet, dass** das Öl/Fett Perillaöl ist.

## Revendications

1. Matériau d'enrobage pour des aliments revenus et/ou frits constitué d'un amidon traité par de l'huile/matière grasse obtenu par le traitement d'un amidon brut contenant 50% en masse, ou plus, d'amidon de pois avec des plages comprises entre 0,01 et 1,0% en masse d'une huile ou d'une matière grasse, et la maturation par la chaleur à une température allant de 30 à 150°C pendant une durée comprise entre 1 et 336 heures, l'amidon ayant une teneur en amylose comprise entre 10 et 60% en masse, tel que mesuré par titration ampérométrique selon la méthode de mesure d'affinité pour l'iode, **caractérisé en ce que** l'amidon résultant traité par de l'huile/matière grasse possède un taux de rétention de viscosité (V) non inférieur à 75%, tel que calculé à partir de la formule :

$$V = (Ve/Vp) \times 100$$

Vp [BU] étant la viscosité maximale sur une courbe de viscosité mesurée à partir d'une suspension d'amidon ayant une concentration en amidon anhydre de 8% de 40°C à 95°C à une vitesse de 1,5°C/min et Ve [BU] étant la viscosité après une période de repos de 10 min à 95°C, à condition que V=100% lorsqu'un pic n'apparaît pas avant la fin de la mesure.

2. Matériau d'enrobage pour des aliments revenus et/ou frits selon la revendication 1, **caractérisé en ce que** l'amidon brut est un mélange d'un ou plusieurs amidons choisis parmi l'amidon de manioc, l'amidon de maïs cireux et l'amidon de riz glutineux avec de l'amidon de pois.

3. Matériau d'enrobage pour des aliments revenus et/ou frits selon les revendications 1 ou 2, **caractérisé en ce que** l'huile/matière grasse est de l'huile de périlla.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61285956 A
- JP 11243891 A
- JP 5017823 A
- JP 8173073 A
- JP 2004113236 A
- JP 2003325119 A

- US 4963378 A
- JP 11243891 B
- JP 2005185122 B
- JP 2003325119 B
- JP 2004113236 B

**Non-patent literature cited in the description**

- Starch Science Handbook. Asakura Shoten, 1977, 177-179